# EUROPÄISCHE PATENTSCHRIFT

(11) **EP 2 181 572 B1**
(45) Veröffentlichungstag und Bekanntmachung des Hinweises auf die Patenterteilung: **21.12.2011**
(21) Anmeldenummer: 08803078.8
(22) Anmeldetag: 18.08.2008
(51) Int. Cl.: H05K 5/06

(54) **SENSORGEHÄUSE FÜR EINEN STRICHCODELESER**
SENSOR HOUSING FOR A BARCODE READER
BOÎTIER DE DÉTECTEUR POUR LECTEUR DE CODE BARRES

(30) Priorität: 22.08.2007 DE 102007039632
(43) Veröffentlichungstag der Anmeldung: 05.05.2010
(73) Patentinhaber: BSH Bosch und Siemens Hausgeräte GmbH, 81739 München (DE)
(72) Erfinder: BEUTLROCK, Maximilian, 83361 Kienberg (DE); FRITZ, Jürgen, 83278 Traunstein (DE)
(86) Internationale Anmeldenummer: PCT/EP2008/060790
(87) Internationale Veröffentlichungsnummer: WO 2009/024551

(56) Entgegenhaltungen:
- EP-A- 0 998 177
- WO-A-2007/017869
- JP-A- 2001 317 996
- US-A- 5 844 228
- US-B1- 6 612 493

## Beschreibung

Die Erfindung betrifft ein druckdichtes Gehäuse für eine Ableseeinheit für optische Muster, so genannte Barcodes, mit einer Aufnahme für eine mit einem Sensor und ggf. wenigstens einer LED bestückbare Platine, einer Aufnahme für eine optische Einrichtung und mit einem Fenster, dass sich im Betrieb der Ableseeinheit im Strahlengang bzw. in der Sichtverbindung zwischen Sensor und dem Muster befindet.

Ein vergleichbares Gehäuse für eine Ableseeinheit zeigt die US 5 291 009. Es stellt ein einstückiges, leichtgewichtiges, in Massenproduktion kostengünstig herstellbares und formstabiles Bauteil dar. Das Gehäuse bildet eine Art Dunkelkammer für den Sensor.

Die WO2007/017369 A offenbart ein Gehäuse für ein elektro-optisches Instrument, mit einer Aufnahme für eine mit einem Sensor bestückbare Platine und mit einem Fenster durch das Licht von oder zu dem Instrument treten kann und mit einer. Druckausgileichseinrichtung.

Es ist Aufgabe der Erfindung, ein Gehäuse für eine Ableseeinheit anzugeben, das auch unter Alterungsbedingungen die Qualität der Ableseeinheit zuverlässig aufrechterhält.

Diese Aufgabe wird bei einem Gehäuse der eingangs genannten Art gelöst, indem eine DrucKausgleichseinrschung und ein Dichtigkeitsprüfanschluss vorgesehen ist, der gekennzeichet ist durch einen abnehmbaren Abdichtungsstopfen auf dem Prüfanschluss der eine Membran umfasst. Denn durch Feuchtigkeit und Schmutzpartikel im Strahlengang kann sich die Lesefähigkeit der Ableseeinheit verschlechtern. Bereits diese Erkenntnis ist der Erfindung zu verdanken. Sie schafft Abhilfe, indem sie das Gehäuse nicht möglichst einfach und billig, sondern besonders aufwändig dicht ausbildet, damit weder Feuchtigkeit noch Schmutzpartikel den optischen Weg zwischen dem Sensor und dem Fenster beeinträchtigen können. Das Gehäuse kann zweiteilig aus einem Oberteil und einem Unterteil ausgebildet sein, die an einer Fügestelle miteinander fest verbunden, zum Beispiel verrastet werden und dort eine Dichtung aufweisen.

Idealerweise ist das Gehäuse also absolut schmutz- und feuchtigkeitsdicht ausgebildet. Wird es aus Kunststoff gefertigt, kann es dieses Erfordernis dauerhaft nur schwer erfüllen. Denn Kunststoff ist nahezu immer porös und altert beispielsweise unter Temperatureinwirkung, so dass sich seine Qualität verschlechtert. Temperaturschwankungen, wie sie beispielsweise in Heißgetränkemaschinen auftreten, verursachen zusätzlich Druckschwankungen. Dadurch kommt es zu einer nahezu unvermeidbaren Diffusion in das an sich geschlossene Kunststoffgehäuse. Erfindungsgemäß verfügt es daher über eine Druckausgleichseinrichtung. Die Erfindung beschreitet also nicht den Weg, das Gehäuse materialseitig und werkstofftechnologisch aufzurüsten, um es möglichst dicht zu gestalten. Sie verfolgt überraschenderweise vielmehr ein entgegengesetzt gerichtetes Prinzip, indem sie gezielt eine Druckeinwirkung auf den Gehäuseinnenraum ermöglicht. Da das Gehäuse einer geringeren Druckdifferenz standhalten muss, kann die Gehäusewandung sogar dünner ausgebildet werden, womit das Gehäuse leichter und seine Herstellung kostengünstiger wird.

Die Erfindung macht sich außerdem die Erkenntnis zunutze, dass nicht die Druckeinwirkung an sich, sondern die Auswirkungen von Druckunterschieden zwischen dem Inneren des Gehäuses und seiner Umgebung einen schädigenden Einfluss beispielsweise auf den Sensor ausüben. Die Druckausgleichseinrichtung hat demzufolge den Effekt, dass sie eine Druckdifferenz abbaut oder gar ausgleicht. Denn je geringer die Druckdifferenz zwischen dem Inneren des Gehäuses und seiner Umgebung ist, desto geringer ist ein Diffusionsdruck durch den Kunststoff der Gehäusewandung. Die Erfindung nutzt dafür den günstigen Umstand, dass im normalen Betrieb nur relativ geringe Druckunterschiede auftreten. Können sie abgebaut bzw. ausgeglichen werden, kann eine Diffusion durch den in der Regel porösen Kunststoff des Gehäuses auf kostengünstige und einfache Weise so gut wie ausgeschlossen werden. Ohne diffundierte Feuchtigkeit und Schmutzpartikel zwischen dem Sensor und dem Fenster kann eine hohe Ablesegenauigkeit gewährleistet werden.

Eine Druckausgleichseinrichtung ermöglicht also die Reduktion oder den Abbau eines Druckunterschieds zwischen "außen" und "innen" eines Sensorgehäuses. Erfindungsgemäß umfasst die Druckausgleichseinrichtung eine Membran. Sie bietet unter anderem den Vorteil, dass sie als flächiges Bauteil parallel zu oder in einer Gehäusewandung und damit Platz sparend angeordnet werden kann. Darüber hinaus kann sie dazu ausgebildet sein, sowohl einen Über- als auch einen Unterdruck auszugleichen.

Es ist bekannt, an druckdichten Behältern einen Prüfanschluss zur beispielsweise werkseitigen Überprüfung ihrer Dichtheit anzuordnen. Das Sensorgehäuses mit einem derartigen Dichtheitsprüfanschluss verfügt über einen abnehmbaren Abdichtungsstopfen, der eine Membran umfasst. Zur Dichtheitsüberprüfung kann dadurch ein vergleichsweise hoher Prüfungsdruck angelegt werden, ohne dass die Membran durch diesen ggf. betriebsfremden Druck belastet oder gar geschädigt würde. Das Kunststoffgehäuse kann damit einer relativen strengen Prüfung unterzogen werden, ohne dass die Qualität der Druckausgleichseinrichtung darunter leiden müsste. Nach der erfolgten Prüfung muss der Prüfanschluss ohnehin zuverlässig verschlossen werden. Enthält dieser Verschluss die Druckausgleichseinrichtung, so können durch die Kombination der Bauteile Montage- und Herstellungskosten eingespart werden. Zudem lässt sich im Reparaturfall die Druckausgleichseinrichtung als separates Bauteil leicht austauschen. Außerdem kann sie an unterschiedliche Anforderungen angepasst werden, ohne dass das gesamte Sensorgehäuse davon betroffen wäre.

Nach einer alternativen Ausgestaltungsform kann ein Gehäuseabschnitt mit geringerer Wandstärke ausgebildet werden, so dass er die Funktion einer Membran übernimmt. Eine derartige Druckausgleichseinrichtung ist folglich einstückig in das Gehäuse integriert, so dass die Herstellungskosten für das Gehäuse samt Druckausgleichseinrichtung gegenüber den alternativen Gehäuseausbildungen minimiert sind.

Die vorher beschriebene Ausgestaltung bringt es mit sich, dass das Gehäusematerial und das Material der Membran identisch sind. Da jedoch an das Gehäuse einerseits und die Membran andererseits unterschiedliche Anforderungen gestellt werden, kann das auszuwählende Material unter Umständen zu einem Kompromiss zwingen. Nach einer weiteren Ausgestaltung ist daher die Membran einstückig mit dem Gehäuse, aber aus einem vom Gehäuse abweichenden Material ausgebildet. Dies bietet unter anderem den Vorteil, dass für das Gehäuse ein möglichst stabiles und dichtes Material verwendet werden kann, wohingegen für die Membran zwar ein ebenfalls dichtes, aber flexibleres Material eingesetzt werden kann. Eine dafür geeignete Herstellungsmethode ist der Zwei-Komponenten-Spritzguss. Die unterschiedlichen Materialien können also einerseits auf ihren jeweiligen Zweck hin ausgewählt, aber andererseits dennoch homogen miteinander verbunden werden.

Die eingangs genannte Aufgabe wird außerdem gelöst durch eine Ableseeinheit mit einer Platine, einem Ablesesensor, einer optischen Einrichtung, wenigstens einer LED zur Beleuchtung eines Musters, einem Gehäuse, das diese Bauteile umgibt, einem Fenster im Gehäuse, das sich im Betrieb der Ableseeinheit im Strahlengang zwischen Sensor und einem abzulesenden Muster befindet, einer Druckausgleichseinheit am Gehäuse, und mit einem Dichtigkeitsprüfanschluss, **gekennzeichnet durch** einen abnehmbaren Abdichtungsstopfen auf dem Prüfanschluss, der eine Membran umfasst.

Das Prinzip der Erfindung wird im Folgenden anhand einer Zeichnung beispielshalber noch näher erläutert. In der Zeichnung zeigen:
- Figur 1:: ein Sensorgehäuse mit einem Prüfanschluss,
- Figur 2:: ein Sensorgehäuse mit einer im 2-K-Verfahren hergestellten Membran, und
- Figur 3:: ein Sensorgehäuse mit einer integrierten Membran.

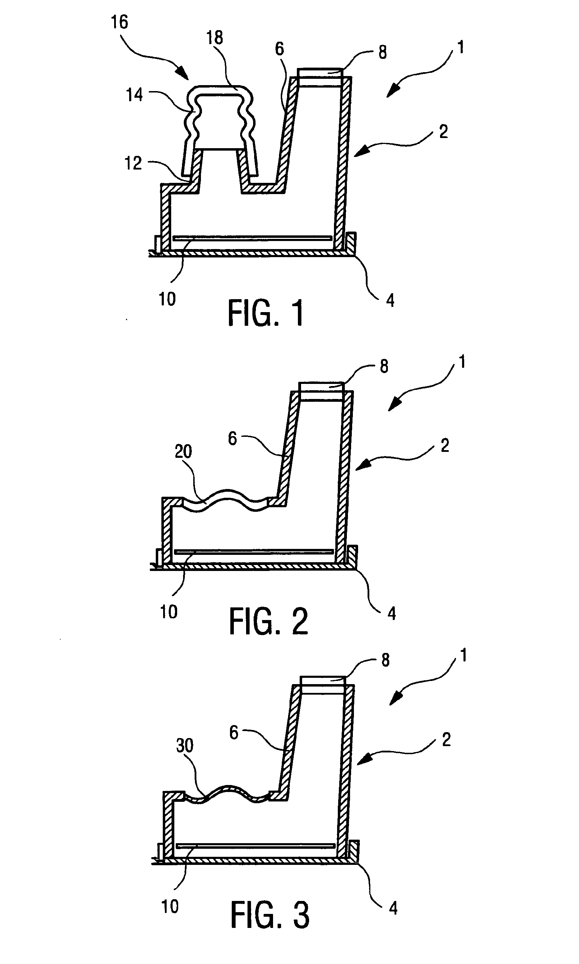

Figur 1 zeigt ein Sensorgehäuse 1 in einer Schnittansicht. Es besteht aus einem Gehäuseoberteil 2 und einem Unterteil 4. Beide Teile sind durch einen Schnappverbindung zusammengehalten und mit einer (nicht dargestellten) Dichtung gegeneinander abgedichtet. Das Oberteil 2 bildet einen domförmigen Abschnitt 6 aus, der an seiner Oberseite ein Fenster 8 trägt. Das Unterteil 4 enthält eine Platine 10, auf der ein Sensor, zum Beispiel ein CCD-Zeilensensor, zum Ablesen eines Musters aufgebracht ist. Außerdem kann sie als Träger von LEDs zur Beleuchtung des Musters dienen. Damit die LEDs den Sensor nicht blenden, kann eine optische Einrichtung, z. B. eine hutförmige Abschirmung, den Sensor abschatten und in den domförmigen Abschnitt hineinragen. Sie kann auf der Platine 10 verstemmt oder vernietet sein. Der Strahlengang des Sensors beim Ablesen reicht also von der Platine 10 durch die Abschirmung, eine Lochblende darin und durch das Fenster 8 hindurch.

Ein derartiges Gehäuse 1 kommt z. B. in Heißgetränkemaschinen zum Einsatz, die mit so genannten Disks betrieben werden. Die Disks tragen Strichcodes, in denen Steuerungsbefehle für die Getränkezubereitung verschlüsselt sind. Vor der Zubereitung des jeweiligen Getränks müssen die Codes entschlüsselt werden. Dies geschieht nach Einlegen der Disks in eine Brühkammer der Getränkemaschinen durch eine Ableseeinheit mit einem Sensorgehäuse 1. Aufgrund seiner zwingenden Anordnung unmittelbar an der Brühkammer ist das Gehäuse 1 erheblichen Temperatur- und damit Druckschwankungen unterworfen. Beide sorgen für eine Alterung des Kunststoffs des Gehäuses 1, wodurch es undicht werden kann. Von dieser Alterung betroffen ist nicht nur die Dichtung zwischen dem Gehäuseoberteil 2 und dem Unterteil 4, sondern auch das Kunststoffmaterial an sich. Es kommt zu Feuchtigkeits- und Schmutzdiffusionen durch das Kunststoffgehäuse 1. Dadurch wird der optische Weg zwischen dem Fenster 8 in dem domförmigen Abschnitt 6 des Oberteils 2 und dem auf der Platine 10 angebrachten Sensor beeinträchtigt. Infolgedessen verschlechtert sich die Ablesegenauigkeit des Sensors.

Das Gehäuse 1 in Figur 1 trägt neben dem domförmigen Abschnitt 6 einen Druckanschlussstutzen 12. Er wird von einem Verschlussstopfen 14 verschlossen, in dessen Oberseite 16 eine Membran 18 als Druckausgleichseinrichtung integriert ist.

Nach der Herstellung und Montage des Gehäuses 1 aus dem Oberteil 2 und dem Unterteil 4 wird seine Dichtheit überprüft. Dazu wird an dem Druckanschlussstutzen 12 ein Prüfdruck angelegt und ein eventueller Druckabfall registriert. Nach Abschluss des Prüfverfahrens werden die als verwendbar klassifizierten Gehäuse 1 verschlossen, indem der Verschlusspfropfen 14 auf den Druckanschlussstutzen 12 druckdicht aufgesetzt wird.

Unterliegt das Gehäuse 1 im Betrieb den oben erläuterten Druckbelastungen, so müssen diese nicht vollständig vom Gehäuse 1 aufgenommen werden. Sie werden in gewissem Rahmen durch die Membran 18 abgebaut, die beispielsweise einem gehäuseaußenseitigen Überdruck nachgibt. Die Membran 18 wird dadurch etwas in das Innere des Gehäuses 1 verschoben. Durch die daraus folgende Kompression des Gehäuseinneren erfolgt eine Druckangleichung gegenüber dem gehäuseaußenseitigen Druck. Damit ist die Druckdifferenz zwischen dem Inneren des Gehäuses 1 und seiner Umgebung zumindest erheblich reduziert, so dass das Kunststoffgehäuse 1 nur noch eine bestenfalls geringere Druckdifferenz aushalten muss. Dadurch können einerseits die Wandungen des Oberteils 2 und des Unterteils 4 geringer dimensioniert werden. Dies spart Material und damit Herstellkosten. Andererseits unterbleibt durch die geringe oder fehlende Druckdifferenz eine Diffusion durch das Kunststoffmaterial des Gehäuses 1, womit weder Feuchtigkeit noch Schmutz in das Gehäuse 1 eindringen können.

Figur 2 zeigt eine vergleichbare Schnittansicht eines Gehäuses 1, bei dem eine Membran 20 in die Wandung des Gehäuseoberteils 2 integriert ist. Diese Ausgestaltung erfordert noch weniger Platz als das Gehäuse 1 gemäß Figur 1. Die Membran 20 befindet sich im Wesentlichen in der Ebene einer Gehäusewandung des Oberteils 2 neben dem domförmigen Abschnitt 6. Sie besteht aus einem besonders elastischen und dichten Material, dass im Zwei-Komponenten-Spritzgussverfahren zusammen mit dem Oberteil 2 des Gehäuses 1 hergestellt und einstückig mit ihm verbunden ist.

Figur 3 stellt eine weitere Alternative eines Gehäuses 1 mit einer Membran als Druckausgleichseinrichtung dar. Das Gehäuse 1 umfasst an derselben Stelle wie das Gehäuse in Figur 2 eine Membran 30, die jedoch aus demselben Material wie das Oberteil 2 des Gehäuses 1 besteht. Seine Eigenschaften, also insbesondere seine Flexibilität, erhält die Membran 30 dadurch, dass sie eine wesentlich geringere Wandstärke aufweist als die übrigen Wandungen des Oberteils 2. Weil sie aus demselben Material wie das Oberteil 2 besteht, kann sie im selben Arbeitsgang wie dieses und damit besonders kostengünstig hergestellt werden.

Da es sich bei den vorhergehenden, detailliert beschriebenen Gehäusen um Ausführungsbeispiele handelt, können sie in üblicher Weise vom Fachmann in einem weiten Umfang modifiziert werden, ohne den Bereich der Erfindung zu verlassen. Insbesondere können die konkreten Ausgestaltungen der Gehäuseform auch in anderer Form als in der hier beschriebenen erfolgen. Ebenso kann die Membran an einer anderen Stelle angeordnet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Gehäuse
- 2: Gehäuseoberteil
- 4: Gehäuseunterteil
- 6: Fenster
- 8: domförmiger Abschnitt
- 10: Platine
- 12: Druckanschlussstutzen
- 14: Verschlusspfropfen
- 16: Oberseite
- 18: Membran
- 20: Membran
- 30: Membran

## Patentansprüche

1. Gehäuse (1) für eine Ableseeinheit für optische Muster mit einer Aufnahme für eine mit einem Sensor bestückbare Platine (10), einem Fenster (8), das sich im Betrieb der Ableseeinheit im Strahlengang zwischen Sensor und dem Muster befindet, einer Druckausgleichseinrichtung (18; 20; 30) und mit einem Dichtigkeitsprüfanschluss (12), **gekennzeichnet durch** einen abnehmbaren Abdichtungsstopfen (14) auf dem Prüfanschluss (12), der eine Membran als Druckausgleichseinrichtung (18) umfasst.

2. Gehäuse (1) nach Anspruch 1, **gekennzeichnet durch** einen Gehäuseabschnitt mit geringerer Wandstärke zur Ausbildung einer Membran (30).

3. Gehäuse (1) nach Anspruch 1 oder 2, **dadurch gekennzeichnet, dass** die Membran (20) einstückig mit dem Gehäuse (1) und aus einem vom Gehäuse (1) abweichenden Material ausgebildet ist.

4. Ableseeinheit mit einer Platine, einem Ablesesensor, einer optischen Einrichtung, wenigstens einer LED zur Beleuchtung eines Codes und einem Gehäuse gemäß Anspruch 1 das zumindest einen Teil dieser Bauteile umgibt.

## Claims

1. Housing (1) for a reader for optical patterns with a mount for a circuitboard (10) able to be equipped with a sensor, a window (8) which in operation of the reader is located in the beam path between sensor and the pattern, a pressure equalisation device (18; 20; 30) and a tightness test connection (12), **characterised by** a removable sealing plug (14), which comprises a membrane as pressure equalisation device (18), on the test connection (12).

2. Housing (1) according to claim 1, **characterised by** a housing section with a smaller wall thickness for construction of a membrane (30).

3. Housing (1) according to claim 1 or 2, **characterised in that** the membrane (20) is formed integrally with the housing (1) and from a material different from the housing (1).

4. Reader with a circuitboard, a reader sensor, an optical device, at least one LED for illuminating a code and a housing according to claim 1, which housing surrounds at least part of these components.

## Revendications

1. Boîtier (1) pour un lecteur de motifs optiques, comprenant un logement pour une platine (10) pouvant être équipée d'un capteur, une fenêtre (8) qui se trouve dans le trajet des rayons entre le capteur et le motif pendant le fonctionnement du lecteur, un dispositif de compensation de pression (18; 20; 30) et comprenant un raccord de contrôle d'étanchéité (12), **caractérisé par** un bouchon étanche amovible (14) sur le raccord de contrôle (12) qui comprend une membrane en tant que dispositif de compensation de pression (18).

2. Boîtier (1) selon la revendication 1, **caractérisé par** une partie de boîtier d'épaisseur de paroi réduite pour former une membrane (30).

3. Boîtier (1) selon la revendication 1 ou 2, **caractérisé en ce que** la membrane (20) est formée d'une seule pièce avec le boîtier (1) et est formée d'un matériau différent de celui du boîtier (1).

4. Lecteur comprenant une platine, un capteur de lecture, un dispositif optique, au moins une diode électroluminescente pour l'éclairage d'un code et un boîtier selon la revendication 1 qui entoure au moins une partie de ces composants.
